# EUROPÄISCHE PATENTANMELDUNG

(11) **EP 2 327 370 A2**
(43) Veröffentlichungstag der Anmeldung: **01.06.2011**
(21) Anmeldenummer: 10189343.6
(22) Anmeldetag: 29.10.2010
(51) Int. Cl.: A61C 1/12, A61C 1/14, A61C 1/18

(54) **Kupplungsvorrichtung für ein medizinisches, insbesondere zahnärztliches, Handstück**

(30) Priorität: 25.11.2009 EP 09014699
(71) Anmelder: W & H Dentalwerk Bürmoos GmbH, 5111 Bürmoos (AT)
(72) Erfinder: Baier, Christof, 5111, Bürmoos (AT); Mangelberger, Michael, 5113, St. Georgen (AT); Pruckner, Christian, 1190, Wien (AT)

(57) **Zusammenfassung**

Medizinische, insbesondere dentale, Kupplungsvorrichtung mit einer an einem ersten Kupplungsteil angeordneten ersten Spule (5) und einer mit einem zweiten Kupplungsteil verbundenen zweiten Spule zum induktiven Energie- und/ oder Datenaustausch zwischen dem ersten und zweiten Kupplungsteil (33,34), wobei an der ersten und/ oder zweiten Spule (5) ein Kopplungselement (7) angeordnet ist, um ein an der ersten und/ oder zweiten Spule (5,5';6,6') erzeugtes magnetisches Feld mit der anderen der beiden Spulen (5) zu koppeln, und wobei das Kopplungselement (7') Feldlinienleitmittel (8) zum Leiten und/ oder Ausrichten der Feldlinien des magnetischen Felds in Richtung der ersten oder zweiten Spule (5) sowie Feldsicherungsmittel (9) zur Vermeidung der Schwächung des magnetischen Felds durch selbsterzeugte und/ oder empfangene Fremdfelder aufweist.

## Beschreibung

Die vorliegende Erfindung betrifft eine medizinische, insbesondere dentale, Kupplungsvorrichtung mit einer Spule sowie einem Kopplungselement zum induktiven Energie- und/ oder Datenaustausch gemäß dem Oberbegriff des Anspruchs 1 sowie ein medizinisches, insbesondere dentales, Handstück, Behandlungswerkzeug und ein Reinigungs- oder Pflegegerät mit einer derartigen Kupplungsvorrichtung.

Ein derartiges Handstück ist aus der Patentanmeldung EP 09006196.1 bekannt. Das Handstück umfasst eine Außenhülse, eine in der Außenhülse angeordnete und in eine Antriebsbewegung versetzbare Werkzeugaufnahme zur Aufnahme eines Behandlungswerkzeugs und eine erste Spule zur induktiven Kopplung, insbesondere zum induktiven Energie- und/ oder Datenaustausch, mit einer an einem Behandlungswerkzeug angeordneten zweiten Spule umfassenden Speichereinheit.

Die Spule des Handstücks ist innerhalb der radialen Ausdehnung und an dem der Werkzeugaufnahmeöffnung entgegengesetzten Ende der hohlen Werkzeugaufnahme angeordnet. Durch diese Anordnung ist die Spule durch die Werkzeugaufnahme, das die Werkzeugaufnahme aufgenommene Behandlungswerkzeug und gegebenenfalls durch weitere um die hohle Aufnahme angeordnete Bauteile gut vor während der Behandlung anfallenden Verschmutzungen geschützt. Die Spule ist hierzu auf einem in Bezug auf die Werkzeugaufnahme unbeweglichen, insbesondere flächigen, Träger angeordnet. Dieser Träger weist eine Öffnung auf, um die die erste Spule angeordnet ist und die derart bemessen ist, dass sie für die Speichereinheit des Behandlungswerkzeugs zumindest teilweise durchsetzbar ist, so dass die erste Spule und die Speichereinheit des Behandlungswerkzeugs, insbesondere deren Spule, welche am Schaftabschnitt des Behandlungswerkzeugs, insbesondere an dessen freien Ende angeordnet ist, unmittelbar ineinander anordenbar sind. Um einen störungsfreien Energie- und Datentransfer zu ermöglichen, sind das die Spule im Handstück umgebende Betätigungselement, der Träger der Spule, sowie Abschnitte der Außenhülse vollständig aus elektrisch nicht leitendem Material.

Durch die Anordnung der zweiten Spule der am Schaftabschnitt des Behandlungswerkzeugs befindlichen Speichereinheit in der Spule des Handstücks, sowie der Ausgestaltung der umliegenden Bauteile aus elektrisch nicht leitendem Material wird ein zuverlässiger Daten- und Energietransfer erzielt. Auf Grund von Platzmangel kann jedoch nicht immer die zweite Spule des Behandlungswerkzeugs innerhalb der ersten Spule des Handstücks im Instrumentenkopf angeordnet werden. Somit besteht bei Anordnung der zweiten Spule des Behandlungswerkzeuges außerhalb der ersten Spule, auf Grund von Platzmangel im Instrumentenkopf, die Gefahr einer Gefährdung des Daten-und Energietransfers.

Des Weiteren erfordert die bekannte Ausgestaltung der Energie- und/ oder Datenübertragung eine Ausbildung aller im Bereich der Spule liegenden Bauteile, wie zum Beispiel des Betätigungselements, Abschnitte der Außenhülse, sowie der Werkzeugaufnahme, aus nicht elektrisch leitendem Material, um den Energie- und Datentransfer nicht durch die in den elektrisch leitenden Bauteilen erzeugten Gegenfelder zu gefährden. Bei einem derart komplexen Aufbau eines medizinischen, insbesondere dentalen, Handstücks mit einer rotieren gelagerten Werkzeugaufnahme werden eine Vielzahl von Bauteilen im Instrumentenkopf bzw. in dessen Umfeld, verbaut, so dass es schwer möglich ist, alle Bauteile aus nicht elektrisch leitenden Materialien zu fertigen. Somit besteht immer die Gefahr, dass durch elektrisch leitende, insbesondere metallische Bauteile, wie z.B. der Kugellager im Instrumentenkopf mit Innenring, Rollkörper und Außenring, des Kronenrads zur Kraftübertragung von der Antriebswelle auf die Werkzeugaufnahme, der Antriebswelle selbst oder des Schaftes des Behandlungswerkzeugs, Gegenfelder erzeugt werden, welche eine induktive Energie- und/ oder Datenübertragung zwischen den beiden Spulen gefährden.

Der vorliegenden Erfindung liegt daher die Aufgabe zugrunde eine medizinische, insbesondere dentale, Kupplungsvorrichtung, vorzugsweise für ein medizinisches, insbesondere dentales, Handstück, ein Laborhandstück zur Bearbeitung von dentaltechnischen Materialien, und Behandlungswerkzeug zu schaffen, die es ermöglicht eine sichere Energie- und/ oder Datenübertragung zwischen zwei Kupplungsteilen der Kupplungsvorrichtung, insbesondere zwischen einem Handstück und einem Behandlungswerkzeug, oder zwischen einem Handstück und einem Lesegerät, einer Steuereinheit und/ oder einer Versorgungseinheit oder einem Reinigungs- oder Pflegegerät, wie zum Beispiel einem Sterilisator, zu gewährleisten.

Diese Aufgabe wird gemäß einem Ausführungsbeispiel durch eine medizinische, insbesondere dentale, Kupplungsvorrichtung mit einer an einem ersten Kupplungsteil angeordneten ersten Spule und einer mit einem zweiten Kupplungsteil verbundenen zweiten Spule zum induktiven Energie- und/ oder Datenaustausch zwischen dem ersten und zweiten Kupplungsteil gelöst, wobei an der ersten und/ oder zweiten Spule ein Kopplungselement angeordnet ist, um ein an der ersten und/ oder zweiten Spule erzeugtes magnetisches Feld mit der anderen der beiden Spulen zu koppeln, und wobei das Kopplungselement Feldlinienleitmittel zum Leiten und/ oder Ausrichten der Feldlinien des magnetischen Felds in Richtung der ersten oder zweiten Spule sowie Feldsicherungsmittel zur Vermeidung der Schwächung des magnetischen Felds durch selbsterzeugte und/ oder empfangene Fremdfelder aufweist.

Der Begriff Kupplungsvorrichtung umfasst alle Vorrichtungen zum lösbaren Verbinden zumindest zweier medizinischer, insbesondere dentaler oder chirurgischer, Gegenstände mit jeweils zumindest einem Kupplungsbereich, wie z.B. Werkzeug und Handstück, Handstück und Adapter und/ oder Versorgungsschlauch, Handstück und Motor, Motor und Adapter und/ oder Versorgungsschlauch, Versorgungsschlauch und Steuer- und/ oder Versorgungseinheit, oder Handstück und Vorrichtung, welche die medizinischen, insbesondere zahnärztlichen, Handstücke reinigt, insbesondere von Verschmutzungen befreit, desinfiziert, sterilisiert und/ oder pflegt.

Gemäß einem bevorzugten Ausführungsbeispiel wird die Aufgabe durch ein medizinisches, insbesondere dentales, Handstück, welches eine Außenhülse, eine in der Außenhülse angeordnete und in eine Antriebsbewegung versetzbare Werkzeugaufnahme zur Aufnahme eines Behandlungswerkzeugs und eine Spule zum induktiven Energie- und/ oder Datenaustausch mit einer weiteren Spule, oder durch ein medizinisches, insbesondere dentales, Behandlungswerkzeug mit einem einen Kupplungsbereich aufweisenden Werkzeugschaft zum Anschluss des Behandlungswerkzeuges an einem Handstück, einem Bearbeitungskopf, sowie einer Spule zum induktiven Energie- und/ oder Datenaustausch mit einer weiteren Spule, gelöst, wobei an der Spule des Handstücks oder des Behandlungswerkzeugs ein Kopplungselement angeordnet ist, um ein an einer der beiden Spulen erzeugtes magnetisches Feld mit einer weiteren Spule zu koppeln, und wobei das Kopplungselement Feldlinienleitmittel zum Leiten und/ oder Ausrichten der Feldlinien des magnetischen Felds in Richtung einer der Spulen, sowie Feldsicherungsmittel zur Vermeidung der Schwächung des magnetischen Felds durch selbsterzeugte und/ oder empfangene Fremd- bzw. Gegenfelder aufweist.

Der Begriff Handstück umfasst alle geraden, gebogenen, oder pistolenförmigen Handstücke als auch Teile von Handstücken mit einer Werkzeugaufnahme zur Aufnahme eines Behandlungswerkzeugs. Des Weiteren bezeichnet der Begriff Handstück alle kabelgebundenen Handstücke, welche insbesondere mit einer Steuer- und/ oder Versorgungseinheit verbunden sind, oder kabellose Handstücke, welche insbesondere eine Energiequelle aufweisen.

Die vorzugsweise in dem medizinischen, insbesondere dentalen, Handstück oder Behandlungswerkzeug angeordnete Spule zur Erzeugung eines Magnetfeldes zum induktiven Energie- und/ oder Datenaustausch mit einer oder mehreren weiteren Spulen besteht zumindest aus einem Wickel eines stromdurchflossenen Leiters, insbesondere eines Drahtes, der mindestens eine Windung besitzt. Durch die Versorgung der Spule mit Energie wird in der Spule und im angrenzenden Bereich der Spule ein Magnetfeld erzeugt. Durch Anordnung einer weiteren Spule, insbesondere eines weiteren Leiters, in dem magnetischen Feld können Energie und/ oder Daten zwischen den Spulen übertragen werden. Liegen jedoch weitere elektrisch leitende Bauteile, wie zum Beispiel eine metallische Außenhülse, Werkzeugaufnahme, oder Antriebswelle in dem erzeugten magnetischen Feld, werden in diesen Bauteilen Wirbelströme erzeugt, welche ein Gegenfeld generieren, die das durch die Spule erzeugte Magnetfeld schwächen und somit den Energie- und/ oder Datenaustausch gefährden. Weitere Fremdfelder von anderen Quellen mit gleichen oder unterschiedlichen Frequenzbereichen können die Energie- und/ oder Datenübertragung ebenfalls beeinträchtigen.

Zur sicheren Energie- und/ oder Datenübertragung von einer Spule zu einer oder mehreren weiteren Spulen weisen somit insbesondere das Handstück und/ oder das Behandlungswerkzeug neben einer Spule ein Kopplungselement auf. Dieses besteht zumindest aus einem Feldlinienleitmittel sowie zumindest einem Feldsicherungsmittel. Das Feldlinienleitmittel leitet und richtet die an einer ersten und/ oder zweiten Spule erzeugten Feldlinien in Richtung der jeweils anderen Spule. Somit wird ein sicherer Energie- und/ oder Datentransfer zwischen den beiden Spulen gewährleistet, auch wenn die Spulen nicht innerhalb einander angeordnet sind. Hierzu besteht das Feldlinienleitmittel aus weichmagnetischem Material, insbesondere aus Ferrit, Nickel-Zink, oder Mangan-Zink. Das Feldsicherungsmittel dient zur Sicherung des an der Spule erzeugten Magnetfeldes vor selbsterzeugten Gegenfeldern und/ oder Fremdfeldern. Das Feldsicherungsmittel dient hierbei als Abstandhalter zwischen der Spule und elektrisch leitenden Bauteilen des Handstücks oder des Behandlungswerkzeugs. Das Feldsicherungsmittel ist aus nicht elektrisch leitfähigem Material, insbesondere aus Kunststoff, Silikon, Harz, Keramik, Klebstoff, Lack, oder Glas gebildet.

Ein vorzugsweise an dem Handstück oder Behandlungswerkzeug angeordneter Datenträger, welcher mit der ersten oder zweiten Spule verbunden ist, umfasst neben einer Spule bevorzugt einen elektronischen Speicher, der als lesbarer und/ oder beschreibbarer Speicher ausgebildet ist. Die induktive Kopplung der ersten und zweiten als Antennen wirkende Spulen dient sowohl der Energieübertragung als auch dem Datenaustausch zwischen Handstück und Behandlungswerkzeug. Der Datenaustausch zwischen der ersten und zweite Spule ist vorzugsweise als modulierte Signalübertragung ausgebildet, insbesondere im Hochfrequenz- oder Radiofrequenzbereich, wobei der Datenträger als RFID-Etikett, bestehend aus einem RFID-Chip und einer Spule, ausgebildet ist.

Das eine Spule und Kopplungselement umfassende Behandlungswerkzeug ist insbesondere als in Rotation versetzbares Werkzeug, bevorzugt zur Bearbeitung von hartem oder weichem Gewebe oder zum Einbringen eines Implantats, insbesondere als rotierbarer Bohrer, oder als in eine Hubbewegung oder als in Schwingung versetzbares Werkzeug ausgebildet. Des Weiteren kann das Werkzeug als fest mit dem Handstück verbundenes Bearbeitungswerkzeug, vorzugsweise als Laser-Tip zum Leiten eines Laserlichtstrahls von einem Handstück auf eine Behandlungsstelle, ausgebildet sein. Somit ist die das Behandlungswerkzeug aufnehmende Werkzeugaufnahme drehbar, hin und her, in Schwingung versetzbar oder als fester Bestandteil der Außenhülse des Handstücks ausgestaltet. Die die Werkzeugaufnahme aufnehmende Außenhülse des Handstücks ist vorzugsweise mehrteilig, insbesondere durch ein oder mehrere innenliegende Bauteil und/ oder durch mehrere außenliegende Bauteile, ausgebildet. Die Behandlungswerkzeuge umfassen einen Kupplungsbereich aufweisenden Werkzeugschaft zur Aufnahme des Behandlungswerkzeugs in der Werkzeugaufnahme, sowie einen Bearbeitungskopf. Die zweite Spule und das Kopplungselement sind vorzugsweise an einem der beiden Enden des Kupplungsbereichs des Werkzeugschaftes, insbesondere an dem dem Bearbeitungskopf näheren Ende, angeordnet.

Bevorzugt sind die Spule und das Kopplungselement im Handstück zum induktiven Energie- und/ oder Datenaustausch an einem der beiden Enden der Werkzeugaufnahme, vorzugsweise an dem der Einführung des Behandlungswerkzeuges in die Werkzeugaufnahme des Handstücks dienenden Gehäuseöffnung zugewandten Ende, angeordnet. Besonders bevorzugt ist die erste Spule in einem Rücksprung des Gehäuses des Instrumentenkopfes untergebracht.

Gemäß einem Ausführungsbeispiel umschließt das die Feldlinienleitmittel und die Feldsicherungsmittel aufweisende Kopplungselement die Spule des Handstücks oder des Behandlungswerkzeugs an einer oder mehreren Seiten, wobei das Kopplungselement zumindest an einer der Seiten die Feldlinienleitmittel und die Feldsicherungsmittel aufweist. Wird die Spule einseitig, zweiseitig, oder dreiseitig von elektrisch leitenden Bauteilen, insbesondere von Bauteilen des Instrumentenkopfes des Handstücks, umgeben, wird mittels der Anordnung eines Kopplungselements zwischen den elektrisch leitenden Bauteilen und der Spule, das von der Spule erzeugte magnetische Feld mittels der Feldsicherungsmittel vor Gegenfelder und/ oder Fremdfelder geschützt. Des Weiteren werden die erzeugten Feldlinien des magentischen Feldes der Spule mittels der Anordnung von Feldlinienleitmittel in einer oder in mehreren Seiten des Kopplungselements zu einer weiteren Spule ausgerichtet und geleitet. Hierzu ist das Kopplungselement vorzugsweise als Scheibe oder Hülse bei einseitiger, oder als Schale zur zweiseitigen, dreiseitigen oder vierseitigen Ummantelung der Spule ausgebildet. Das Kopplungselement kann des Weiteren kreissegmentförmig ausgebildet sein, um am Handstück im Bereich der Werkzeugaufnahme eine oder mehrere Austrittsstellen für ein Medium, insbesondere für ein Fluid, oder Lichtabgabeöffnungen auszubilden.

Bevorzugt ist das Kopplungselement als formfestes oder elastisch verformbares Bauteil ausgebildet. Wird das Kopplungselement insbesondere in einem Instrumentenkopf eines Handstücks aufgenommen, ist dieses vorzugsweise als Festkörper oder als Folie ausgestaltet. Wird das Kopplungselement hingegen am Werkzeugschaft des Behandlungswerkzeugs oder an der Außenhülse des Handstücks angebracht und ist somit von außen zugänglich, so ist dieses vorzugsweise als elastisch verformbares Bauteil, insbesondere als Elastomer, ausgebildet.

In einer weiteren bevorzugten Ausführungsform ist das Kupplungselement als Beschichtung, insbesondere in Form eines Lackes, eines Pulvers oder Klebstoffes, ausgebildet. Hierzu weist die Beschichtung die Feldlinienleitmittel sowie die Feldsicherungsmittel auf und ist an einem die erste Spule im Handstück aufnehmenden Bauteil, vorzugsweise der Außenhülse des Handstücks, eines Bauteils des Instrumentenkopfes, der Werkzeugaufnahme, oder der Spule selbst, oder an einem die Spule am Behandlungswerkzeug aufnehmenden Bauteil, insbesondere des Werkzeugschaftes, angebracht. Die Feldlinienleitmittel sind hierbei vorzugsweise in Pulverform in einem Feldsicherungsmittel, welches vorzugsweise als Lack, Klebstoff oder ebenfalls als Pulver ausgebildet ist, eingebettet. Alternativ können die Feldlinienleitmittel und/ oder Feldsicherungsmittel partikelförmig, als Kugeln oder Teilchen mit undefinierter Form und Größe, Stäben, Scheiben, Hülsen, oder Schalen in dem Kopplungselement, vorzugsweise in Vergussmasse, in einem Kunststoffkörper, Klebstoff, oder Harz eingelagert sein.

Besonders bevorzugt ist das Kopplungselement mittels der Feldlinienleitmittel und der Feldsicherungsmittel schichtweise ausgebildet. Einer Schicht des Feldlinienleitmittels folgt eine Schicht des Feldsicherungsmittels. So kann das Kopplungselement vorzugsweise mittels einer Schicht Kunststoff gefolgt von einer Schicht Ferrit aufgebaut sein.

Gemäß einem weiteren Ausführungsbeispiel sind die Spule und das Kopplungselement unlösbar mit der Kupplungsvorrichtung verbunden und mittels Festklammern, Kleben oder Pressen an dem ersten und/ oder zweiten Kupplungsteil montiert. Alternativ können die Spule und das Feldlinienleitmittel und/ oder das Feldsicherungsmittel des Kopplungselements lösbar mit der Kupplungsvorrichtung sein. Hierbei bildet die Spule und das Feldlinienleitmittel und/ oder das Feldsicherungsmittel des Kopplungselements eine lösbare Einheit mit vorzugsweise einer Haltevorrichtung, insbesondere einem Gewinde, einer Klammer oder einem Schiebeelement, um mit dem ersten und/ oder zweiten Kupplungsteil verbindbar zu sein.

In einer anderen bevorzugten Ausführungsform weist das Kopplungselement neben den Feldlinienleitmittel und den Feldsicherungsmittel einen Datenträger auf. Dieser ist mit der jeweiligen Spule des Handstücks oder des Behandlungswerkzeugs verbunden. Durch die induktive Kopplung der Spulen findet ein Datenaustausch statt, bei dem bevorzugt handstück-, behandlungswerkzeug- und/ oder pflegebezogene Daten aus dem Datenträger lesbar oder auf den Datenträger schreibbar sind.

Die medizinische, insbesondere dentale, Kupplungsvorrichtung zeichnet sich durch eine Reihe erheblicher Vorteile aus.

Durch die Anordnung eines Kopplungselements mit Feldlinienleitmittel und Feldsicherungsmittel, insbesondere an einer im Handstück oder am Behandlungswerkzeug angeordneten Spule, wird ein sicherer Energie- und/ oder Datentransfer auch in Handstücken mit elektrisch leitenden Bauteilen gewährleistet, insbesondere bei Anordnung einer weiteren Spule außerhalb der Spule des Handstücks oder des Behandlungswerkzeugs. Somit können auf Grund der Feldsicherungsmittel Bauteile des Instrumentenkopfes aus elektrisch leitendem Material, vorzugsweise Metall, gefertigt sein, ohne den Energie- und/ oder Datentransfer negativ zu beeinflussen.

Durch die Anordnung von Feldlinienleitmittel in dem Kopplungselement kann neben dem Leiten und Ausrichten der Feldlinien des magnetischen Feldes gleichzeitig die Windungszahl der Spule bei Beibehalten der Induktivität minimiert werden. Dies führt neben einer Minimierung der Baugröße der Spule, auf Grund des geringeren elektrischen Widerstands der Spule, zu einer Erhöhung des Wirkungsgrads der Energie- und/ oder Datenübertragung. Dies spielt insbesondere bei batteriebetriebenen Handstücken eine wichtige Rolle, da so die Laufzeit des Handstücks verlängert werden kann.

Einen weiteren Vorteil der Erfindung bildet die Möglichkeit des Nachrüstens bereits vom Anwender in Gebrauch befindlicher Handstücke und Behandlungswerkzeuge, insbesondere mit elektrisch leitfähigen Bauteilen, mittels des lösbaren oder unlösbaren Anbringens des separaten Bauteils, welche eine Spule, ein Kopplungslement, sowie vorzugsweise einen Datenträger aufweist. Der Anwender kann so bei seinem bereits bestehenden Instrumentarium handstück-, behandlungswerkzeug- und/ oder pflegebezogene Daten aus einem Datenträger eines Handstücks oder Behandlungswerkzeugs lesen oder auf diesen schreiben.

Nachfolgend wird die Erfindung anhand mehrerer Ausführungsbeispiele und in Verbindung mit den beigefügten Zeichnungen erläutert:
Figur 1 zeigt eine Außenansicht eines medizinischen, insbesondere dentalen, Handstücks mit einem in Schnittdarstellung dargestellten und eine Werkzeugaufnahme aufweisenden Instrumentenkopf.
Figur 2 zeigt den in Figur 1 gezeigten Instrumentenkopf mit einer ersten Ausführungsform des Kopplungselements zum induktiven Energie- und/ oder Datenaustausch zwischen einer ersten im Instrumentenkopf angeordneten Spule und einer weiteren Spule in Schnittdarstellung.
Figur 3 zeigt ebenfalls in Schnittdarstellung ein zweites Ausführungsbeispiel des in einem Instrumentenkopf des Handstücks angeordneten Kopplungselements.
Figur 4 zeigt eine dritte Ausgestaltung des die Feldlinienleitmittel und Feldsicherungsmittel aufweisenden Kopplungselements.
Figur 5 zeigt eine weitere Ausführung und Anordnung des Kopplungselements im Instrumentenkopf des medizinischen, insbesondere dentalen, Handstücks.
Figur 6 zeigt den in Figur 1 bis 5 gezeigten Instrumentenkopf mit einer Werkzeugaufnahme sowie ein darin aufgenommenes Behandlungswerkzeug mit einer Spule und einer weiteren Ausgestaltung des Kopplungselements.
Figur 7 zeigt eine schematische Darstellung einer medizinischen, insbesondere dentalen Kupplungsvorrichtung mit einem ersten und zweiten Kupplungsteil.
Figur 8 zeigt die in Figur 7 gezeigte Kupplungsvorrichtung mit einer weiteren Ausführungsform des Kopplungselements.
Figur 9 zeigt eine schematische Darstellung eines Reinigungs- oder Pflegegeräts mit einer Kupplungsvorrichtung zum lösbaren Verbinden eines medizinischen, insbesondere dentalen Handstücks mit dem Reinigungs- oder Pflegegerät.

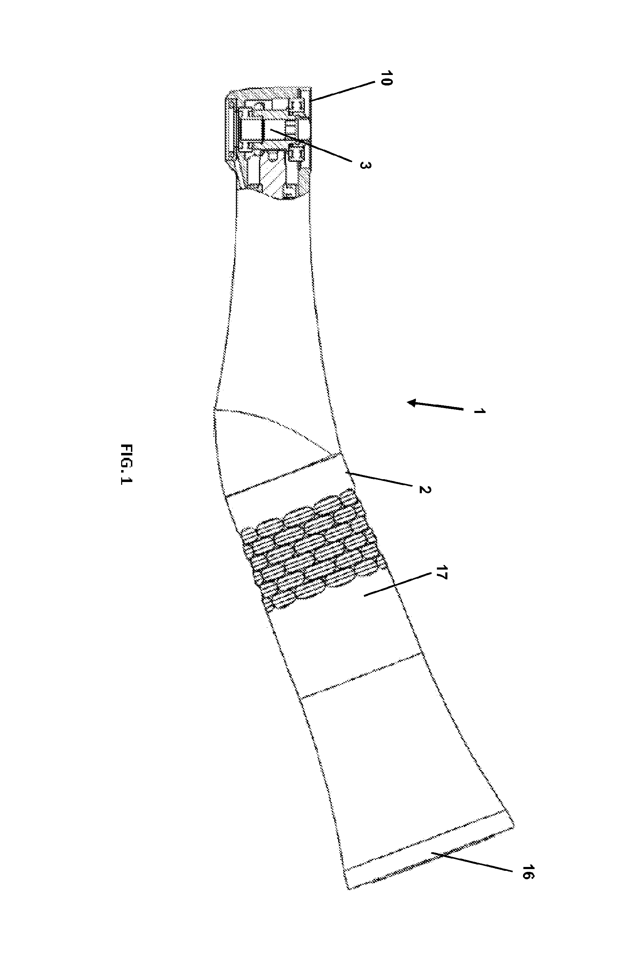

Die Figur 1 zeigt ein medizinisches, insbesondere dentales, Handstück 1 mit einer Außenhülse 2. Das Handstück 1 besteht aus einem Griffstück 17 und einem Instrumentenkopf 10. In dem Instrumentenkopf 10 ist eine Werkzeugaufnahme 3 zur Aufnahme eines Behandlungswerkzeugs 4 angeordnet. An dem dem Instrumentenkopf 10 gegenüberliegenden Ende weist das Handstücks 1 ein Anschlussstück 16 zum Anschluss an eine Antriebs-, Steuer- und/ oder Versorgungseinheit auf.

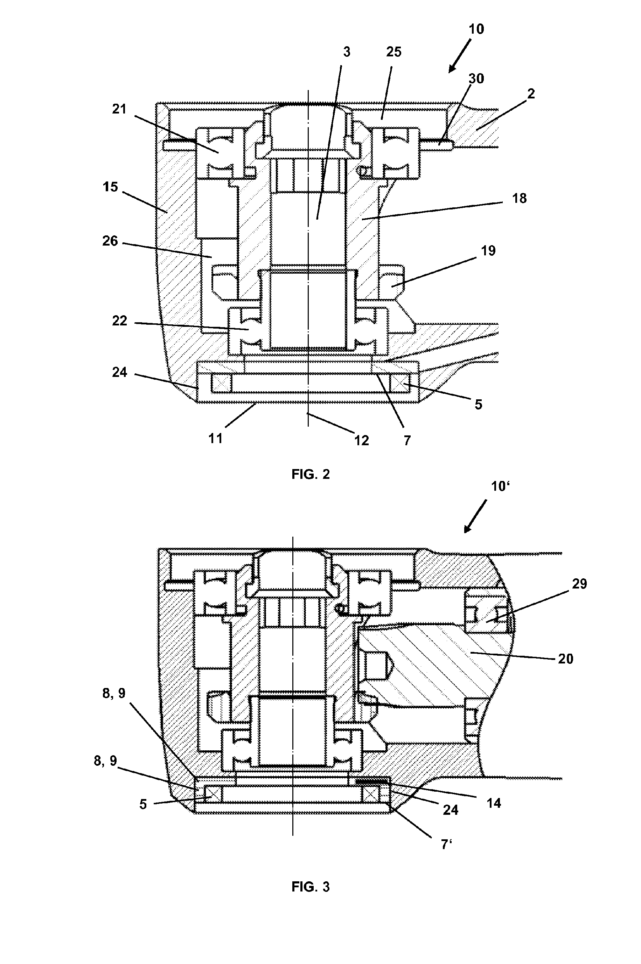

Die Figur 2 zeigt den Instrumentenkopf 10 des medizinischen, insbesondere dentalen, Handstücks 1. Am unteren Ende des Kopfgehäuses 15 ist eine Gehäuseöffnung 11 zur Aufnahme eines Behandlungswerkzeugs 4 in der Werkzeugaufnahme 3 vorgesehen.

Im Inneren des Kopfgehäuses 10 ist die Spannhülse 18 der Werkzeugaufnahme 3 mittels eines oberen Lagers 21 und eines unteren Lagers 22 rotierend um die Mittelachse 12 der Werkzeugaufnahme 3 gelagert. Der Lagerinnenring des unteren Lagers 22 sowie die Spannhülse 18 bilden die Aufnahme für das Behandlungswerkzeug 4. Der Lageraußenring des unteren Lagers 21 ist gegen das Kopfgehäuse 15 und der Lageraußenring des oberen Lagers gegen eine Lageraufnahme 30 gegengelagert. An der Spannhülse 18 ist des Weiteren ein Kronenrad 19 montiert, zur Übertragung der Antriebsbewegung von einer im Handstück 1 gelagerten Antriebswelle 20 auf die Werkzeugaufnahme 3 und somit auf das Behandlungswerkzeug 4.

Am unteren Ende des Instrumentenkopfes 10 ist ein Gehäuserücksprung 24 vorgesehen, welcher zur Aufnahme einer ersten Spule 5, die zum induktiven Energie- und/ oder Datenaustausch mit einer, vorzugsweise an einem Behandlungswerkzeug 4 angeordneten, zweiten Spule 6 dient sowie zur Aufnahme eines an der Spule 5 angeordneten Kopplungselements 7 um ein an einer der beiden Spulen 5, 6 erzeugtes magnetisches Feld mit der anderen der beiden Spulen 5, 6 zu koppeln. Das Kopplungselement 7 ist in einer ersten Ausführungsform als ringförmige Scheibe mit einer Öffnung ausgebildet. Die Öffnung ist derart ausgebildet, dass sie vom Behandlungswerkzeug 4 durchsetzbar ist, so dass das Behandlungswerkzeug 4 in der Spannhülse 18 aufnehmbar ist. Das Kopplungselement 7 ist zwischen der Spule 5 und der Außenhülse 2 des Kopfgehäuses 15 angeordnet und umgibt die Spule 5 einseitig.

Durch die Anordnung der rotierend gelagerten Werkzeugaufnahme 3 in dem Instrumentenkopf 10 werden mehrere Hohlräume 25 und Zwischenräume 26 gebildet. Diese Hohlraume 25, 26 ermöglichen die Anordnung der Spule 5 und des Kopplungselements 7 an einem der beiden Enden der Werkzeugaufnahme 3 oder alternativ zwischen den beiden Enden der Werkzeugaufnahme 3, insbesondere zwischen dem oberen Lager 21 und unteren Lager 22.

Die Figur 3 zeigt eine alternative Ausführungsform des im Instrumentenkopf 10' angeordneten Kopplungselements 7'. Die in einem Gehäuserücksprung 24 angeordnete Spule 5 wird von dem Kopplungselement 7' zweiseitig umgeben. Das ringförmige Kopplungselement 7' ist in dieser Ausführung mittels der Feldlinienleitmittel 8 und der Feldsicherungsmittel 9 schichtweise aufgebaut und weist ebenfalls eine Öffnung zur Aufnahme des Behandlungswerkzeugs 4 in der mittels der Antriebswelle 20 angetriebenen Werkezugaufnahme 3 auf. Die Antriebswelle 20 ist im Handstück 1 mittels eines Wellenlagers 29 drehbar gegenüber der Außenhülse rotierbar gelagert.

Neben den Feldlinienleitmittel 8 und den Feldsicherungsmittel 9 weist das Kopplungselement 7' einen Datenträger 14 auf, so dass durch die induktive Kopplung zwischen den beiden Spulen 5 des Handstücks und der Spule 6 des Behandlungswerkzeugs ein Energieaustausch stattfindet und/ oder handstück-, behandlungswerkzeug- und/ oder pflegebezogene Daten aus dem Datenträger 14 lesbar, oder auf den Datenträger 14 schreibbar sind.

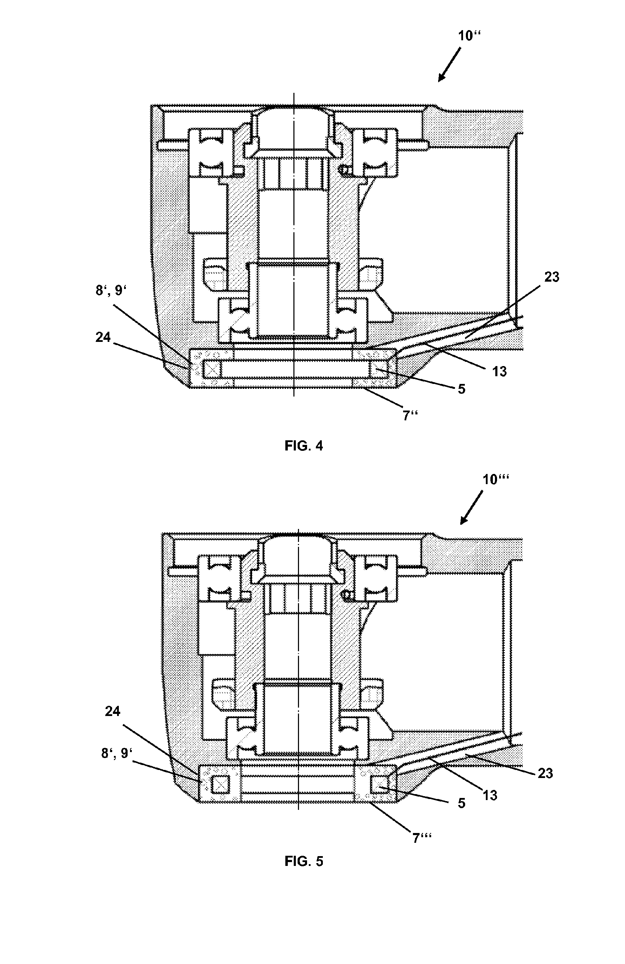

In Figur 4 ist der Instrumentenkopf 10" des medizinischen, insbesondere dentalen, Handstücks mit einer dritten Ausführungsform des die Spule 5 umgebenden Kopplungselements 7" gezeigt. Das in dem Rücksprung 24 des Instrumentenkopfes 10" angeordnete Kopplungslement 7" umschließt die Spule 5 an drei Seiten. An allen drei Seiten weist das Kopplungselement 7" die Feldlinienleitmittel 8' und die Feldsicherungsmittel 9' auf. Die Feldlinienleitmittel 8' und/ oder Feldsicherungsmittel 9' sind hierbei in Partikelform ausgebildet und in dem Kopplungselement 7" eingebettet.

Die erste Spule 5 des Handstücks 1 ist mit einer Leitung 13 zur Energie- und/ oder Datenversorgung verbunden, wobei das zwischen der ersten Spule 5 und der Außenhülse 2 des Handstücks 1 angeordnete Kopplungselement 7" die Leitung 13 vorzugsweise mittels einer Durchgangsbohrung durch das Kopplungselement 7" stützt. Die Leitung 13 wird mittels eines Leitungskanals 23 von dem Gehäuserücksprung 24 des Instrumentenkopfes 10" nach hinten in den die Antriebswelle 20 aufnehmenden Handstückabschnitt zu einem Datenträger oder zu einer Steuer- und/ oder Versorgungseinheit geführt. Alternativ kann die Leitung 13, insbesondere bei Ausbildung der Spule 5 und des Feldlinienleitmittels 8, 8' und/ oder des Feldsicherungsmittel 9, 9' des Kopplungselements 7, 7', 7", 7"', 7"", 7""' außerhalb des Handstücks 1, entlang der Außenhülse 2 geführt werden.

In Figur 5 ist eine vierte Version des in einem Gehäuserücksprung 24 des Instrumentenkopfes 10'" angeordneten Kopplungselements 7"' dargestellt. Hierbei umgibt das Kopplungselements 7"' die Spule 5 an vier Seiten, wobei das Kopplungselement 7"' an drei Seiten die Feldlinienleitmittel 8' und die Feldsicherungsmittel 9' aufweist. An der vierten Seite, welche der Werkzeugaufnahmeöffnung zugewandt ist, enthält das Kopplungselement 7"' lediglich das Feldlinienleitmittel 8' oder das Feldsicherungsmittel 9'.

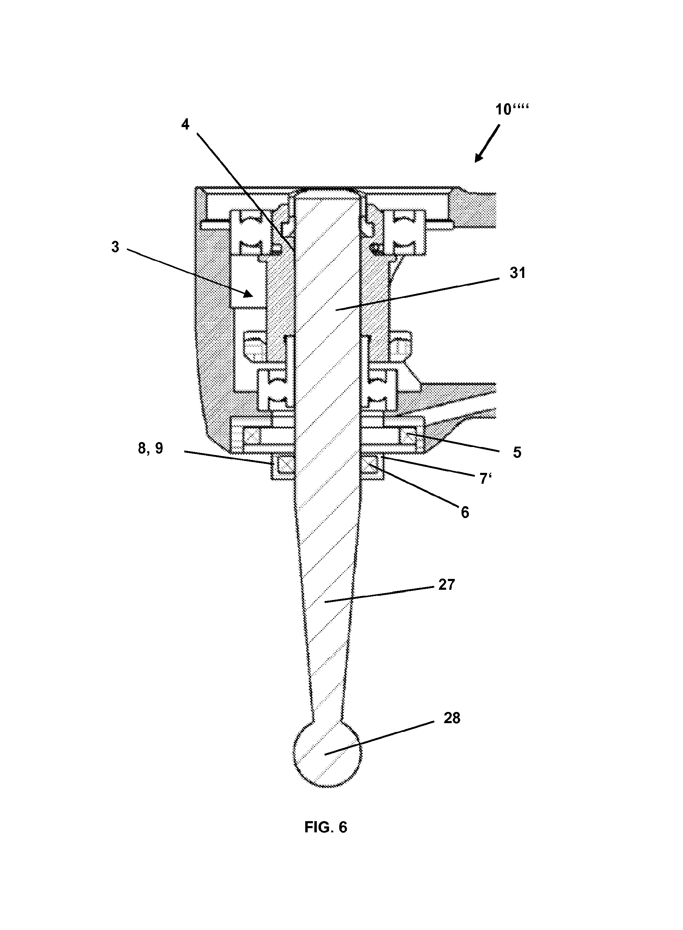

In Figur 6 ist das medizinische, insbesondere dentale, Behandlungswerkzeug 4 mit einem einen Kupplungsbereich 31 aufweisenden Werkzeugschaft 27 zum Anschluss des Behandlungswerkzeuges 4 an einem Handstück 1 abgebildet. An den Werkzeugschaft 27 schließt sich ein Bearbeitungskopf 28 zur Bearbeitung von hartem und weichem Gewebe an. Zum induktiven Energie- und/ oder Datenaustausch mit einer, vorzugsweise in einem Instrumentenkopf 10"" eines Handstücks 1 angeordneten Spule 5, weist das Behandlungswerkezeug 4 eine Spule 6 auf. Die Spule 6 ist vorzugsweise an einem der beiden Enden des Kupplungsbereichs 31 des Werkzeugschaftes 27 angeordnet, insbesondere an jenem Ende das dem Bearbeitungskopf 28 näher ist. An der Spule 6 des Behandlungswerkzeugs 4 ist ein Kopplungselement 7' angeordnet, um ein an einer der beiden Spulen 5, 6 erzeugtes magnetisches Feld mit der anderen der beiden Spulen 5, 6 zu koppeln. Das Kopplungselement 7' weist Feldlinienleitmittel 8' zum Leiten und/ oder Ausrichten der Feldlinien des magnetischen Felds in Richtung einer der beiden Spulen 5, 6 sowie Feldsicherungsmittel 9' zur Vermeidung der Schwächung des durch eine der beiden Spulen 5, 6 erzeugten magnetischen Felds durch selbsterzeugte und/ oder empfangene Fremdfelder auf. Das Kopplungselement 7' umgibt die Spule 5 am Behandlungswerkzeug 4 an zwei Seiten und ist in dem gezeigten Ausführungsbeispiel schichtweise aufgebaut. Einer Schicht des Feldlinienleitmittels 8' folgt eine Schicht des Feldsicherungsmittels 9'.

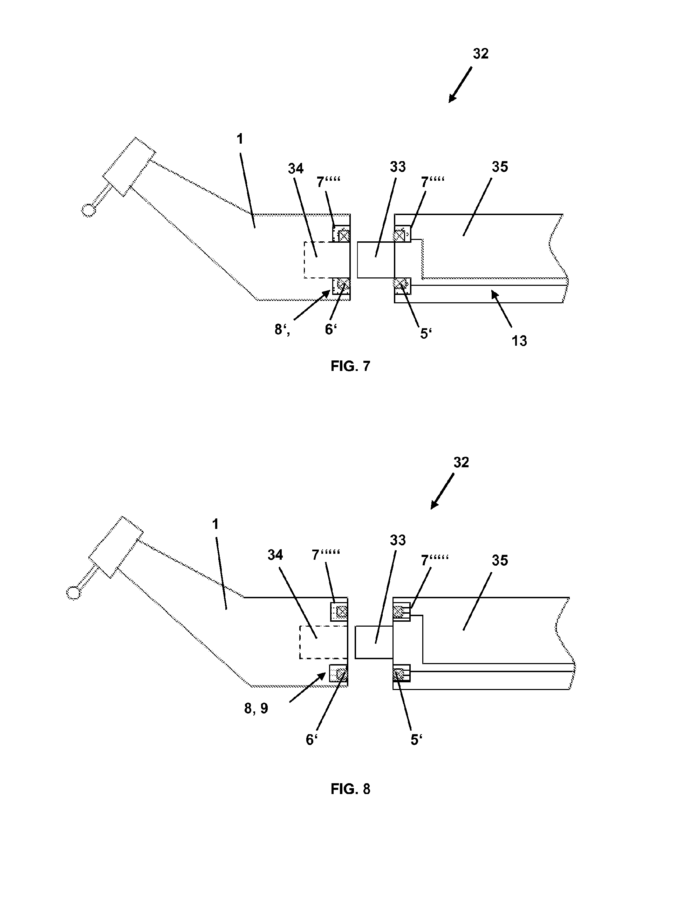

Die Figur 7 zeigt eine medizinische, insbesondere dentale, Kupplungsvorrichtung 32 mit einem ersten Kupplungsteil 33 an einem Motorstück 35 und einem zweiten Kupplungsteil 34 an einem medizinischen, insbesondere dentalen, Handstück 1. Mittels der Kupplungsvorrichtung 32 ist das Handstück 1 an das Motorstück 35 kuppelbar. Zur Energie- und/ oder Datenübertragung, insbesondere zwischen dem Handstück 1 und dem Motorstück 35, weisen beide Kupplungsteile 33, 34 der Kupplungsvorrichtung 32 eine Spule 5', 6' auf. Die erste Spule 5' des Motorstücks 35 ist mit einer Leitung 13 zur Energie-und/ oder Datenversorgung verbunden. Zur sicheren Energie- und/ oder Datenübertragung weisen das erste und zweite Kupplungsteil 33, 34 neben einer Spule 5', 6' ein Kopplungselement 7"" auf. Dieses wiederum besteht aus einem Feldlinienleitmittel 8' sowie zumindest aus einem Feldsicherungsmittel 9'. Bei dem vorliegenden Ausführungsbeispiel sind die Spulen 5', 6' von dem Kopplungselement 7"" zweiseitig umgeben. Die Feldlinienleitmittel 8' oder Feldsicherungsmittel 9' sind hierbei in Partikelform ausgebildet und jeweils in dem anderen Mittel 8', 9' des Kopplungselement 7"" eingebettet.

In Figur 8 ist ein weiteres Ausführungsbeispiel der medizinischen, insbesondere dentalen, Kupplungsvorrichtung 32 mit einem ersten und zweiten Kupplungsteil 33, 34 gezeigt. Hierbei umgibt das Kopplungselement 7""' die Spule 5' des Motorstücks 35 und die Spule 6' des Handstücks 1 an drei Seiten. Das Kopplungselement 7""' ist in dieser Ausführung mittels der Feldlinienleitmittel 8 und der Feldsicherungsmittel 9 schichtweise aufgebaut. Einer Schicht des Feldlinienleitmittels 8 folgt eine Schicht des Feldsicherungsmittels 9.

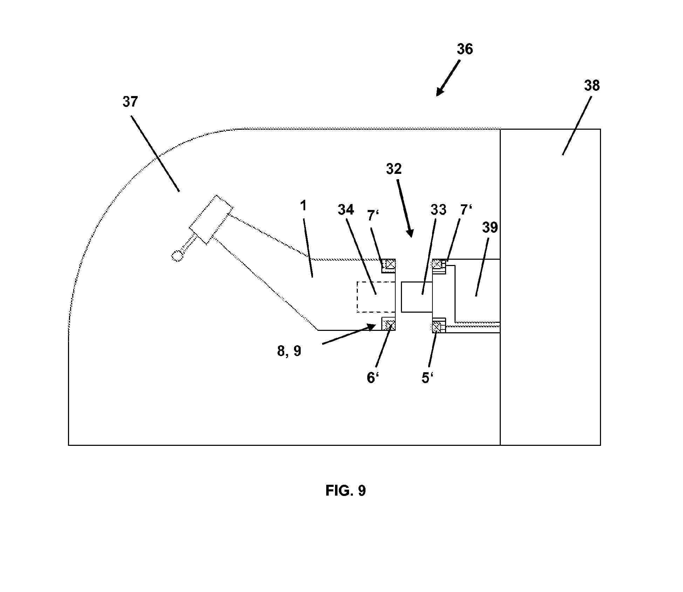

Figur 9 zeigt ein Reinigungs- oder Pflegegerät 36 zur Reinigung- und/ oder Pflege zumindest eines medizinischen, insbesondere dentalen, Handstücks 1. Ein Anschlussstück 39 mit einem ersten Kupplungsteil 33 der Kupplungsvorrichtung 32 zum lösbaren

Verbinden des Reinigungs- oder Pflegegeräts 36 mit einem medizinischen, insbesondere dentalen Handstücks 1, welches einen zweiten Kupplungsteil 34 aufweist, ist vorzugsweise in dem Reinigungs- oder Pflegeraum 37 des Reinigungs- oder Pflegegeräts 36 angeordnet. Des Weiteren weist das Gerät 36 eine Steuerung 38 zur Regelung und Steuerung der Reinigung und/ oder Pflege des aufgenommenen Handstücks 1 auf. Zur sicheren Energieübertragung, insbesondere Datenübertragung zwischen dem zu reinigenden und/ oder pflegenden Handstück 1 und dem Reinigungs- oder Pflegegerät 36, insbesondere zur Steuerung der Prozessschritte abhängig von dem aufgenommenen Handstücks 1, weist das erste und zweite Kupplungsteil 33, 34 neben einer Spule 5', 6' ein Kopplungselement 7' auf. Dieses besteht aus einem Feldlinienleitmittel 8 sowie zumindest aus einem Feldsicherungsmittel 9. Bei dem vorliegenden Ausführungsbeispiel sind die Spulen 5', 6' von dem Kopplungselement 7' zweiseitig umgeben. Das Kopplungselement 7' ist mittels der Feldlinienleitmittel 8 und der Feldsicherungsmittel 9 schichtweise aufgebaut.

Die Erfindung ist nicht auf die beschriebenen Ausführungsbeispiele beschränkt, sondern umfasst alle Ausführungen, die das prinzipielle, sinngemäße Funktionsprinzip der Erfindung anwenden oder beinhalten. Des Weiteren sind alle Merkmale aller beschriebenen und dargestellten Ausführungsbeispiele miteinander kombinierbar. Insbesondere sind alle beschriebenen und dargestellten Ausführungsbeispiele des Kopplungselements an allen beschriebenen und dargestellten Kupplungsvorrichtungen anbringbar.

## Patentansprüche

1. Medizinische, insbesondere dentale, Kupplungsvorrichtung (32) mit einer an einem ersten Kupplungsteil (33) angeordneten ersten Spule (5, 5') und einer mit einem zweiten Kupplungsteil (34) verbundenen zweiten Spule (6, 6') zum induktiven Energie- und/ oder Datenaustausch zwischen dem ersten und zweiten Kupplungsteil (33, 34), wobei an der ersten und/ oder zweiten Spule (5, 5'; 6, 6') ein Kopplungselement (7, 7', 7", 7"', 7"", 7""') angeordnet ist, um ein an der ersten und/ oder zweiten Spule (5, 5'; 6, 6') erzeugtes magnetisches Feld mit der anderen der beiden Spulen (5, 5'; 6, 6') zu koppeln, **dadurch gekennzeichnet, dass** das Kopplungselement (7, 7', 7", 7"', 7"", 7""') Feldlinienleitmittel (8, 8') zum Leiten und/ oder Ausrichten der Feldlinien des magnetischen Felds in Richtung der ersten oder zweiten Spule (5, 5'; 6, 6') sowie Feldsicherungsmittel (9, 9') zur Vermeidung der Schwächung des magnetischen Felds durch selbsterzeugte und/ oder empfangene Fremdfelder aufweist.

2. Medizinische, insbesondere dentale, Kupplungsvorrichtung (32) nach Anspruch 1, **dadurch gekennzeichnet, dass** das Kopplungselement (7, 7', 7", 7"', 7"", 7'"") an einer oder mehreren Seiten der Spule (5, 5'; 6, 6') angeordnet ist, wobei das Kopplungselement (7, 7', 7", 7"', 7"", 7""') zumindest an einer der Seiten die Feldlinienleitmittel (8, 8') und die Feldsicherungsmittel (9, 9') aufweist.

3. Medizinische, insbesondere dentale, Kupplungsvorrichtung (32) nach Anspruch 1 oder 2, **dadurch gekennzeichnet, dass** das Kopplungselement (7, 7', 7", 7"', 7"", 7""') als formfestes Bauteil, insbesondere als Festkörper oder Folie, oder als elastisch verformbares Bauteil, welches insbesondere ein Elastomer umfasst, ausgebildet ist.

4. Medizinische, insbesondere dentale, Kupplungsvorrichtung (32) nach Anspruch 1 oder 2, **dadurch gekennzeichnet, dass** das Kopplungselement (7, 7', 7", 7"', 7"", 7""') als Beschichtung, insbesondere in Form eines Lackes, eines Pulvers oder Klebstoffes, an einem die erste und/ oder zweite Spule (5, 5'; 6, 6') in der Kupplungsvorrichtung (32) tragenden Bauteil ausgebildet ist.

5. Medizinische, insbesondere dentale, Kupplungsvorrichtung (32) nach einem der vorherigen Ansprüche, **dadurch gekennzeichnet, dass** das Feldlinienleitmittel (8, 8') aus weichmagnetischem Material, insbesondere aus Ferrit, Nickel-Zink, oder Mangan-Zink, besteht.

6. Medizinische, insbesondere dentale, Kupplungsvorrichtung (32) nach einem der vorherigen Ansprüche, **dadurch gekennzeichnet, dass** das Feldsicherungsmittel (9, 9') aus nicht elektrisch leitfähigem Material, insbesondere aus einem Kunststoff, Silikon, Harz, Keramik, Klebstoff, Lack, oder Glas, besteht.

7. Medizinische, insbesondere dentale, Kupplungsvorrichtung (32) nach einem der vorherigen Ansprüche, **dadurch gekennzeichnet, dass** die Feldlinienleitmittel (8') und/ oder die Feldsicherungsmittel (9') in Form von einem oder mehreren Partikeln, insbesondere in Form von Kugeln oder Teilchen mit undefinierter Form und Größe, Stäben, Scheiben, Hülsen, oder Schalen, in dem Kopplungselement (7", 7"', 7"") eingebettet sind.

8. Medizinische, insbesondere dentale, Kupplungsvorrichtung (32) nach einem der vorherigen Ansprüche, **dadurch gekennzeichnet, dass** das Kopplungselement (7, 7', 7""') schichtweise aufgebaut ist, wobei die Schichten die Feldlinienleitmittel (8) und die Feldsicherungsmittel (9) umfassen.

9. Medizinische, insbesondere dentale, Kupplungsvorrichtung (32) nach einem der vorherigen Ansprüche, **dadurch gekennzeichnet, dass** die erste und/ oder zweite Spule (5, 5'; 6, 6') und das Kopplungselement (7, 7', 7", 7"', 7"", 7""') unlösbar mit der Kupplungsvorrichtung (32) verbunden sind.

10. Medizinische, insbesondere dentale, Kupplungsvorrichtung (32) nach einem der Ansprüche 1 bis 8, **dadurch gekennzeichnet, dass** die erste und/ oder zweite Spule (5, 5'; 6, 6') und das Feldlinienleitmittel (8, 8') und/ oder das Feldsicherungsmittel (9, 9') des Kopplungselements (7, 7', 7", 7"', 7"", 7""') ein separates Bauteil bilden, das lösbar mit der Kupplungsvorrichtung (32) verbunden ist.

11. Medizinische, insbesondere dentale, Kupplungsvorrichtung (32) nach Anspruch 10, **dadurch gekennzeichnet, dass** das separate Bauteil eine Haltevorrichtung, insbesondere ein Gewinde, eine Klammer oder ein Schiebeelement, zum Verbinden des Bauteils mit der Kupplungsvorrichtung aufweist.

12. Medizinische, insbesondere dentale, Kupplungsvorrichtung (32) nach einem der vorherigen Ansprüche, **dadurch gekennzeichnet, dass** das Kopplungselement (7') einen mit der ersten und/ oder zweiten Spule (5, 5'; 6, 6') verbundenen Datenträger (14) aufweist.

13. Medizinisches, insbesondere dentales, Handstück (1) **gekennzeichnet durch** eine Kupplungsvorrichtung (32) nach einem der vorherigen Ansprüche, wobei der erste Kupplungsteil (33) der Kupplungsvorrichtung (32), an dem die erste Spule (5) und das Kopplungselement (7, 7', 7", 7"') vorgesehen sind, **durch** eine in dem Handstück (1) angeordnete Werkzeugaufnahme (3) für ein Behandlungswerkzeug (4) gebildet ist.

14. Medizinisches, insbesondere dentales, Behandlungswerkzeug (4) **gekennzeichnet durch** eine Kupplungsvorrichtung (32) nach einem der Ansprüche 1 bis 12, wobei die zweite Spule (6) und das Kopplungselement (7') an einem Abschnitt des Werkzeugschafts angeordnet sind, welcher den Kupplungsbereich (31) zum Anschluss des Behandlungswerkzeuges (4) an ein Handstück (1) bildet oder mit einem derartigen Kupplungsbereich (31) verbunden ist.

15. Medizinisches, insbesondere dentales, Reinigungs- oder Pflegegerät (36) **gekennzeichnet durch** eine Kupplungsvorrichtung (32) nach einem der Ansprüche 1 bis 12, wobei der erste Kupplungsteil (33) der Kupplungsvorrichtung (32), an dem die erste Spule (5') und das Kopplungselement (7') vorgesehen sind, **durch** ein Anschlussstück (39) zum lösbaren Verbinden eines medizinischen, insbesondere dentalen Handstücks (1) mit dem Reinigungs- oder Pflegegerät (36) gebildet ist.
